# EUROPEAN PATENT APPLICATION

(11) **EP 4 734 065 A1**
(43) Date of publication of application: **29.04.2026**
(21) Application number: 25207101.4
(22) Date of filing: 07.10.2025
(51) Int. Cl.: G06T 11/60

(54) **GENERATIVE ARTIFICIAL INTELLIGENCE (AI)-BASED IMAGE GENERATION USING ATTRIBUTE-BASED SLIDER CONTROLS**

(30) Priority: 14.10.2024 US 202418914394
(71) Applicant: Fujitsu Limited, Kawasaki-shi, Kanagawa 211-8588 (JP)
(72) Inventor: GUPTA, Aakar, Santa Clara, CA 95054 (US); JAIN, Rahul, Santa Clara, CA 95054 (US); NIINUMA, Koichiro, Santa Clara, CA 95054 (US)
(74) Representative: Hoffmann Eitle

(57) **Abstract**

In an embodiment, generative Al-based image generation using attribute-based slider control is provided. A prompt indicative of a description of a first image is received. The first image is generated based on the prompt, by a text-to-image model. A set of attributes associated with the description is determined, based on a first language model. The set of attributes corresponds to semantics associated with the first image. Based on a second language model, a set of questions associated with prompt is generated. Slider boundary values and initial slider value are generated, based on the set of questions and the first image. A set of sliders is generated based on the slider boundary values and the initial slider value. Each slider corresponds to an attribute. A user input associated with the set of sliders is received and a second image is generated. The second image is rendered.

## Description

### FIELD

The embodiments discussed in the present disclosure are related to generative Artificial Intelligence (Al)-based image generation using attribute-based slider controls.

### BACKGROUND

Generative artificial intelligence (AI) involves the use of various techniques to produce new content, such as images, music, or text, which is not directly copied from existing data but rather generated based on learned patterns and structures. One of the most prominent techniques in this domain may be the use of Generative Adversarial Networks (GANs). The GANs may include two neural networks such as generator and discriminator. The two neural networks may work in tandem to create realistic images. One of the primary challenges with GANs may be identifying the specific directions in a latent space that corresponds to meaningful edits in the generated images. This makes it difficult for users to make precise adjustments to attributes such as age, gender, or hairstyle. When using attribute-based slider controls, users may often experience inconsistent variations in the generated images. Small adjustments to sliders may result in disproportionate changes, leading to lack of control and predictability in an image generation process. The GANs may be typically trained on specific datasets, which may limit ability to generate a wide variety of images. These constraints mean that typical GANs may not be suitable for applications requiring diverse and general image generation capabilities.

The subject matter claimed in the present disclosure is not limited to embodiments that solve any disadvantages or that operate only in environments such as those described above. Rather, this background is only provided to illustrate one example technology area where some embodiments described in the present disclosure may be practiced.

### SUMMARY

According to an aspect of an embodiment, a method may include a set of operations which may include receiving a prompt indicative of a description of a first image to be generated. The set of operations may further include generating the first image based on the prompt by a text-to-image model. The set of operations may further include determining a set of attributes (for example, age of a person, hair color of the person and the like) associated with the description (for example, a young girl with curly hair) of the first image based on a first language model. The set of attributes may correspond to semantics associated with the first image. The set of operations may further include generating a set of questions associated with the prompt, based on a second language model. The set of operations may include generating slider boundary values, and an initial slider value based on the set of questions associated with the prompt, and the first image to generate a set of sliders associated with the set of attributes. The set of sliders may be generated based on the slider boundary values and the initial slider value. Each slider of the set of sliders may be associated with a corresponding attribute of the set of attributes. The set of operations may include receiving a user input associated with the set of sliders and generating a second image based on the user input associated with the set of sliders, and the first image. Finally, the second image may be rendered on a display device.

The objects and advantages of the embodiments will be realized and achieved at least by the elements, features, and combinations particularly pointed out in the claims.

Both the foregoing general description and the following detailed description are given as examples and are explanatory and are not restrictive of the disclosure, as claimed.

### BRIEF DESCRIPTION OF THE DRAWINGS

Example embodiments will be described and explained with additional specificity and detail through the use of the accompanying drawings in which:
FIG. 1 is a diagram that illustrates an example environment related to generative artificial intelligence (AI)-based image generation using attribute-based slider controls;
FIG. 2 is a block diagram that illustrates an exemplary electronic device of FIG. 1 for generative AI-based image generation using attribute-based slider controls;
FIG. 3 is a diagram that illustrates an exemplary execution pipeline for generative AI-based image generation using attribute-based slider controls;
FIG. 4 is a diagram that illustrates an exemplary electronic User Interface (UI) indicating a set of sliders for exploring attribute space of a prompt ;
FIG. 5 is a diagram that illustrates an exemplary execution pipeline for determination of slider boundary values and initial slider value ;
FIG. 6A and FIG. 6B are diagrams that collectively illustrate a scenario of generated images based on variation of slider values;
FIG. 7 is a diagram that illustrates a flowchart for a method of determining slider boundary values based on Vision Question Answer (VQA) score;
FIG. 8 is a diagram that illustrates a flowchart for a method of determining a normalized value for a slider value corresponding to a third image;
FIG. 9 is a diagram that illustrates a flowchart for a method of generative AI-based image generation using attribute-based slider controls,
all according to at least one embodiment described in the present disclosure.

### DESCRIPTION OF EMBODIMENTS

Some embodiments described in the present disclosure may relate to methods and systems for generative artificial intelligence (AI)-based image generation using attribute-based slider controls. In the present disclosure, a prompt may be received. The prompt may be indicative of a description of a first image to be generated. The prompt may include, for example, but not limited to, a textual prompt, a visual prompt, and the like. The first image may be generated based on the prompt provided by the user. The first image may be generated based on a text-to-image model. A set of attributes associated with the description of the first image may be determined based on a first language model. The set of attributes may correspond to semantics associated with the first image. The set of attributes may include for example, but not limited to, an age of a person, a hair color of the person, a facial expression of the person, a body-built type of the person, a height of the person, a direction of a face of the person, a gender of the person, and the like. A set of questions associated with the prompt may be generated, based on a second language model. The language models may include, for example, but not limited to, Generative Pre-trained Transformer (GPT) series, Bidirectional Encoder Representations from Transformers (BERT), Text-To-Text Transfer Transformer (T5), and the like. Slider boundary values and initial slider values may be generated based on the set of questions associated with the prompt, and the first image. A set of sliders associated with the set of attributes may be generated, based on the slider boundary values and the initial slide value, each slider of the set of sliders being associated with a corresponding attribute of the set of attributes. A user input may be received associated with the set of sliders to generate a second image based on the user input associated with the set of sliders, and the first image. The second image may be rendered.

The technological field of generative AI-based image generation and parametric image edits may be improved by configuring an electronic device to generate images (for example, a second image) based on a user input. The electronic device may receive a prompt indicative of a description of a first image to be generated. The electronic device may generate the first image based on the prompt. The electronic device may determine a set of attributes associated with the description of the first image. The set of attributes corresponding to the semantics associated with the first image. The electronic device may generate a set of questions associated with the prompt. Further, the electronic device may generate slider boundary values, and an initial slider value based on the set of questions associated with the prompt, and the first image. The electronic device may generate a set of sliders associated with the set of attributes, based on the slider boundary values and the initial slide value, each slider of the set of sliders being associated with a corresponding attribute of the set of attributes. User input may be received to generate a second image. The user input may be associated with the set of sliders, and the first image and render the second image.

Generally, Generative Adversarial Networks (GANs) may fail to identify directions for edits. When the user attempts to modify specific features within the generated image, the modification may lack clear guidance, making it challenging to achieve the desired changes. The problem may further be exacerbated by the inconsistent variations in image generation when adjusting sliders. The user may experience that even minor adjustments may result in unpredictable and nonuniform changes in the output. Hence, adjustments may require a lot of trial and error and may be time-consuming. The GAN may create images that closely resemble the training data, however, generating entirely new and diverse images that extend beyond the training set may remain a complex task. This limitation may reduce the versatility of GANs in applications that require a broad range of image outputs. The user often may face difficulties when initial alignment lacks clarity between the image and the prompt provided.

The disclosed approach may offer several advantages:
1. Flexible threshold - The sliders may be bounded with flexible thresholds covering various versions of the images or covering all sensical images.
2. Consistent and predictable slider variations - Consistent slider variations may enable precise adjustments, ensuring data input and improving overall effectiveness of slider variations.
3. Concept sliders - Concept sliders may allow precise control over individual attributes with minimal interference.
3. Initial alignment of image and prompt - Concept sliders may provide a more refined approach, allowing for precise adjustments to individual attributes without affecting other
4. Use of diffusion models - Utilizing diffusion models may show high fidelity image generation over GAN and directions of edits may be determined efficiently.

Conventional methods of prompt-based image generation may generate images based on the received prompt. This indicates the difficulty in determining how to adjust the model's parameters to achieve specific changes in generated images. Adjusting control parameters (for example, sliders) may result in unpredictable and inconsistent changes in the generated image. This inconsistency may make the GAN model difficult to fine-tune or control its output precisely. Further, GANs may fail to generate a wide variety of images outside their training data set. Also, current methods may not allow systematic and controlled manipulation of specific attributes within generated images through clear and understandable parameters. This makes it hard to explore and adjust individual attributes in a precise and controlled way.

The present disclosure may address these challenges by providing generative AI-based image generation using attribute-based slider controls. This approach may enable more efficient, consistent, and predictable slider variations improving slider driven image generation.

Embodiments of the present disclosure are explained with reference to the accompanying drawings.

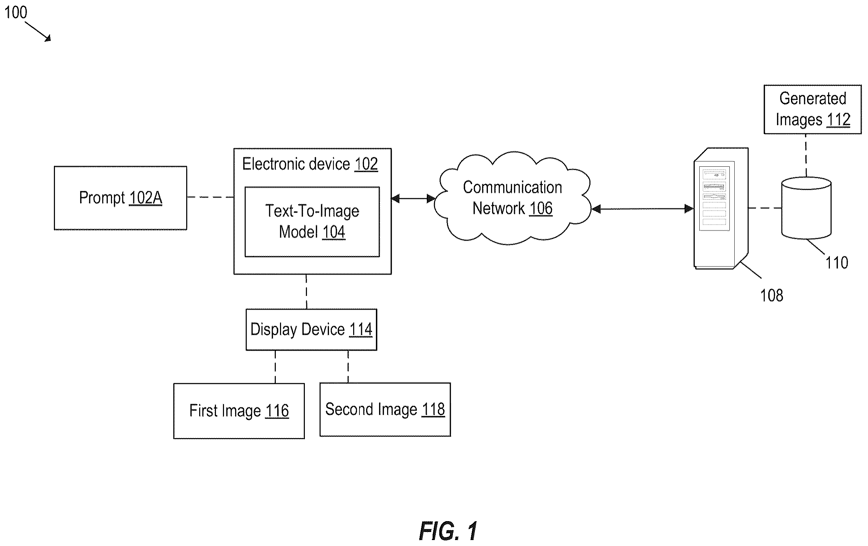

FIG. 1 is a diagram that illustrates an example environment related to generative artificial intelligence (AI)-based image generation using attribute-based slider controls, in at least one embodiment described in the present disclosure. With reference to FIG. 1, there is shown an environment 100. The environment 100 may include an electronic device 102, a text-to-image model 104, a communication network 106, a server 108, a database 110, a display device 114. The electronic device 102, the server 108, and the database 110 may communicate with one another over the communication network 106. In FIG. 1, there is further shown a prompt 102A, generated images 112, a first image 116, and a second image 118.

The electronic device 102 may include suitable logic, circuitry, interfaces, and/or code that may be configured to receive the prompt 102A indicative of a description of the first image 116 and generate the first image 116 based on the prompt 102A using the text-to-image model 104. The prompt 102A may include the description of the image to be generated, for instance, the exemplary prompt 102A may include, but are not limited to, 'a portrait of a young women', 'a fantasy character with long silver hair', 'glowing eyes, 'standing in an enchanted forest', 'child playing in a park with bright smile on face'.

The electronic device 102 may determine a set of attributes associated with the description of the first image 116 based on a first language model. The first language model may be a Large Language Model (LLM). The set of attributes may correspond to semantics associated with the first image 116. The electronic device 102 may generate a set of questions associated with the prompt 102A based on a second language model. The second language model may also be a Large Language Model (LLM). Further, the electronic device 102 may generate slider boundary values, and an initial slider value based on the set of questions associated with the prompt 102A, and the first image 116. A set of sliders may be generated associated with the set of attributes, based on the slider boundary values and the initial slider value. Each slider of the set of sliders may be associated with a corresponding attribute of the set of attributes. Also, the electronic device 102 may receive a user input associated with the set of sliders to generate the second image 118 based on the user input associated with the set of sliders, and the first image 116. Finally, the second image 118 may be rendered based on the display device 114.

In an embodiment, the set of questions may include a first set of questions corresponding to slider independent questions and a second set of questions corresponding to slider dependent questions. The generation of the slider boundary values may be based on the first set of questions and the generation of the initial slider value may be based on the second set of questions.

In an embodiment, the electronic device 102 may include the generation of the slider boundary values that corresponds to a first Visual Question Answering (VQA) model and the generation of the initial slider value that corresponds to a second VQA model. In some embodiments, the first VQA model may be same the second VQA model. In some another embodiment, the first VQA model may be different from the second VQA model.

In an embodiment, the electronic device 102 may generate a set of third images by a Low Rank Adaptation (LoRA) model. The electronic device 102 may determine a VQA score using the first VQA model, based on the set of third image and the set of questions. The electronic device 102 may compare the VQA score with a first predetermined value and update the slider boundary values to a next value, based on the VQA score being less than the first predetermined value. The electronic device 102 may determine an upper bound value of the slider boundary values, based on the VQA score being more than the first predetermined value. The VQA score may be compared with the second predetermined value to update the slider boundary values to a previous value, based on the VQA score being less than the second predetermined value. A lower bound value (or an initial slider value) of the slider boundary values may be determined based on the VQA score being more than the second predetermined value.

In an embodiment, the electronic device 102 may determine a Learned Perceptual Image Patch Similarity (LPIPS) score for each third image of the set of third images. Each third image may result from variation of a slider value. The electronic device 102 may determine a mapping corresponding to a linear function associated with the LPIPS curve, based on the estimated function of the LPIPS curve. A normalized value may be determined for the slider value corresponding to each third image, based on the mapping.

The text-to-image model 104 may be a generative AI model that may generate images based on natural language descriptions of the image. The text-to-image model 104 may be trained based on a set of textual embeddings and an image dataset. The generative AI model may include a discriminator model that may be trained using the set of textual embeddings and the image dataset. The training may be such that the discriminator model may classify whether an output, generated by the generator model, is associated with a real image (from the image dataset) or a fake image. The generator model may be trained to generate an output image for a textual embedding such that the discriminator model may not be able to predict with certainty whether the generated output image is a real image from the image dataset or a fake image. Thus, based on the training, the generative AI model may be configured to generate an image that may not be discernable whether it is a real or fake image. Examples of the generative AI model may include, but are not limited to, a Generative Adversarial Network (GAN) model, a variational autoencoder (VAE) model, an auto-regressive model, a variational autoencoder (VAE), a transformer-based model, a Generative Pre-trained Transformers (GPT) model, or a large language model (LLM).

The text-to-image model 104 may be applied to the received prompt 102A indicating the description of the first image 116. The description of the first image 116 may be processed to encode the description to a numerical format. The encoded description may then be mapped into a latent space, which may be a high-dimensional space where different features of the text are represented. The information from the latent space may be used to generate images that match the descriptions provided in the text. The information from the latent space may be generated using a GAN model. The GAN model may be trained to create images that match the descriptions provided in the text. The display device 114 may be controlled to display the second image 118.

The server 108 may include logic, interfaces, and/or code that may be configured to store the prompt 102A, information related to the set of sliders, the text-to-image model 104 and/or the generated images 112 on the database 110. The server 108 may be configured to retrieve data (for example, the prompt 102A, the information related to the set of sliders, the text-to-image model 104 and/or the generated images 112) from the database 110 and transmit the retrieved data to the electronic device 102.

The server 108 may be implemented as a cloud server and may execute operations through web applications, cloud applications, hypertext transport protocol (HTTP) requests, repository operations, file transfer, and the like. Other example implementations of the server 108 may include, but are not limited to, a database server, a file server, a web server, a media server, an application server, a mainframe server, a cloud computing server, and/or any device with a graph-processing capability (such as, a device with a set of graphic processor units (GPU)).

In at least one embodiment, the server 108 may be implemented as a plurality of distributed cloud-based resources by use of several technologies that are well known to those ordinarily skilled in the art. In certain embodiments, the functionalities of the server 108 may be incorporated in its entirety or at least partially in the electronic device 102, without a departure from the scope of the disclosure. In an embodiment, the server 108 may be configured to train the text-to-image model 104 and the electronic device 102 may be configured to perform inference on downstream prediction tasks (e.g., a task to create the generated images 112 from the prompt 102A), based on the trained text-to-image model 104.

The database 110 may include suitable logic, circuitry, interfaces, and/or code that may be configured to store the generated images 112. The database 110 may further store the text-to-image model 104. The database 110 may be derived from data off a relational or non-relational database, or a set of comma-separated values (csv) files in a conventional storage or a big-data storage. The database 110 may be stored or cached on a device, such as, the server 108 or the electronic device 102. The device storing the database 110 may be configured to receive a query for the generated images 112 or the text-to-image model 104. In response, the device storing the database 110 may be configured to retrieve and transmit the generated images 112 or the text-to-image model 104 to the electronic device 102.

In accordance with an embodiment, the database 110 may be hosted on a plurality of servers stored at same or different locations. The operations of the database 110 may be executed using hardware including a processor, a microprocessor (for example, to perform or control performance of one or more operations), a field-programmable gate array (FPGA), or an application-specific integrated circuit (ASIC). In some other instances, the database 110 may be implemented using software.

A person with ordinary skill in the art will understand that the scope of the disclosure may not be limited to the implementation of the database 110 and the server 108 (or the electronic device 102) as two separate entities. In certain embodiments, the functionalities of the database 110 can be incorporated in its entirety or at least partially in the server 108 (or the electronic device 102), without a departure from the scope of the disclosure.

The communication network 106 may include various communication media through which the electronic device 102 may communicate with the server 108. Examples of the communication network 106 may include, but are not limited to, the Internet, a cloud network, a Wireless Fidelity (Wi-Fi) network, a Personal Area Network (PAN), a Local Area Network (LAN), a cellular network (such as, a Long-term evolution (or 4G) cellular network or a 5G cellular network), a satellite network (such as a network of low earth orbit satellites), and/or a Metropolitan Area Network (MAN)). Various devices in the environment 100 may connect to the communication network 106 using various wired and wireless communication protocols, including TCP/IP, UDP, HTTP, FTP, ZigBee, EDGE, IEEE 802.11, Li-Fi, IEEE 802.16, multi-hop communication, wireless access point (AP), device-to-device communication, cellular communication protocols, and Bluetooth.

The display device 114 may include logic, circuitry, and interfaces configured to display generated images (e.g., first image 116, second image 118). The first image 116 may be generated based on the received prompt 102A. The second image 118 may be generated based on the user input associated with the set of sliders 214B. The display device 114 may be a touch screen which may enable a user to provide user-inputs via the display device 114. The touch screen may be at least one of a resistive touch screen, a capacitive touch screen, or a thermal touch screen. The display device 114 may be realized through several known technologies such as, but not limited to, a Liquid Crystal Display (LCD) display, a Light Emitting Diode (LED) display, a plasma display, or an Organic LED (OLED) display technology, or other display devices. In accordance with an embodiment, the display device 114 may refer to a display screen of a head mounted device (HMD), a smart-glass device, a see-through display, a projection-based display, an electro-chromic display, or a transparent display.

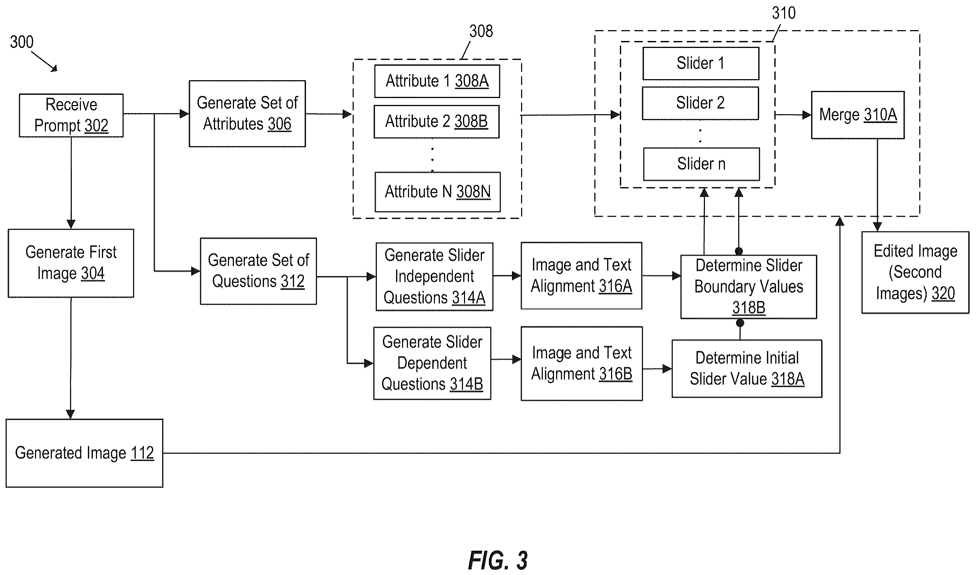

In operation, the electronic device 102 may receive the prompt 102A indicative of a description of the first image 116 to be generated. The prompt 102A may include for example, but not limited to, a textual prompt, a visual prompt, or an audio prompt. The description of the first image 116 may include, for example, 'an image of a young women riding a horse', 'an image of a man playing a game', and the like. The electronic device 102 may generate an output including an image or a set of images merged as a video or a set of videos. The first image 116 may be generated based on the prompt 102A by the text-to-image model 104. The reception of the prompt is described further, for example, in FIG. 3.

In some embodiment, the electronic device 102 may determine a set of attributes associated with the description of the first image 116. The set of attributes may include, but not limited to, 'an age of a person', 'a hair color of the person', 'a facial expression of the person', 'a body-built type of the person', 'a height of the person', 'a direction of a face of the person', or 'a gender of the person'. The set of attributes may correspond to semantics associated with the first image 116. For example, the prompt 102A may be 'an image of a young male person with curly hair with muscular shape, body, realistic'. The prompt 102A may be processed by a first language model to generate the set of attributes. The set of attributes associated with the above exemplary prompt, may be, for example, gender (i.e., male), age (i.e., young), hair type (i.e., curly hair), a body type (e.g., muscular), and the like. Details related to determination of the set of attributes associated with the description of the first image 116 are provided, for example, in FIG. 3.

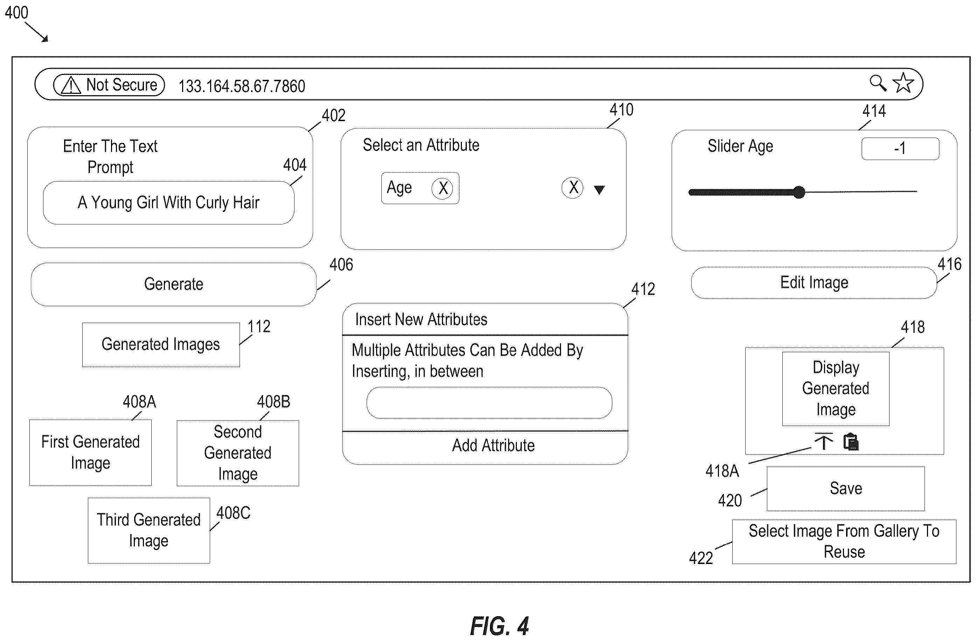

The electronic device 102 may be configured to generate a set of questions associated with the prompt 102A, based on a second language model. Details related to generation of the set of questions associated with the prompt are provided, for example, in FIG. 4. The electronic device 102 may generate slider boundary values and an initial slider value based on the set of questions associated with the prompt 102A, and the first image 116. Details related to generation of slider boundary values and the initial slider value are provided, for example, in FIG. 3.

The electronic device 102 may generate the set of sliders associated with the set of attributes, based on the slider boundary values and the initial slider value. Each slider of the set of sliders may be associated with a corresponding attribute of the set of attributes. The initial slider value may be provided based on the set of questions and the first image 116 instead of users selecting the value for alignment with the prompt 102A. Details related to generation of the set of sliders are provided, for example, in FIG. 3.

The electronic device 102 may be configured to receive a user input associated with the set of sliders. The electronic device 102 may generate the second image 118 based on the user input associated with the set of sliders, and the first image 116. The electronic device 102 may then render the generated second image 118 on the display device 114. Details related to user input reception, second image generation, and second image rendering are provided, for example, in FIG. 3.

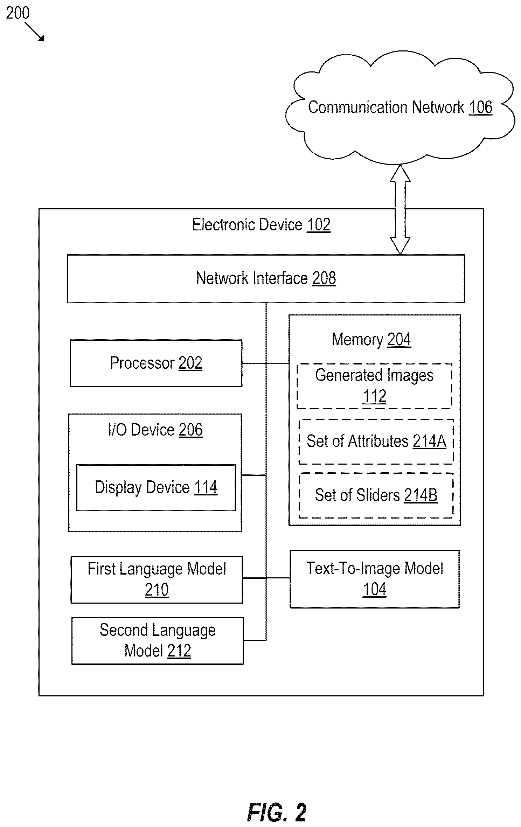

FIG. 2 is a block diagram that illustrates an exemplary electronic device of FIG. 1 for generative AI-based image generation using attribute-based slider controls, at least one embodiment described in the present disclosure. FIG. 2 is explained in conjunction with elements from FIG. 1. With reference to FIG. 2, there is shown a block diagram 200 of the electronic device 102. The electronic device 102 may include a processor 202, a memory 204, I/O device 206, network interface 208, a first language model 210, a second language model 212, and the text-to-image model 104. The I/O device 206 may include a display device 114. The memory 204 may include generated images 112 (for example, the first image 116 and the second image 118), and the set of attributes 214A, and the set of sliders 214B.

The processor 202 may include suitable logic, circuitry, and/or interfaces that may be configured to execute program instructions associated with different operations to be executed by the electronic device 102. The operations may include, but are not limited to, prompt reception, first image generation, attributes determination, questions determination, slider boundary values and initial slider value generation, sliders generation, user input reception, second image generation, rendering control. The processor 202 may include any suitable special-purpose or general-purpose computer, computing entity, or processing device, including various computer hardware or software modules, and may be configured to execute instructions stored on any applicable computer-readable storage media. For example, the processor 202 may include a microprocessor, a microcontroller, a digital signal processor (DSP), an application-specific integrated circuit (ASIC), a Field-Programmable Gate Array (FPGA), or any other digital or analog circuitry configured to interpret and/or to execute program instructions and/or to process data.

Although illustrated as a single processor in FIG. 2, the processor 202 may include any number of processors configured to, individually or collectively, perform or direct performance of any number of operations of the electronic device 102, as described in the present disclosure. Additionally, one or more of the processors may be present on one or more different electronic devices 102, such as different servers.

In some embodiments, the processor 202 may be configured to interpret and/or execute program instructions and/or process data stored in the memory 204. In some embodiments, the processor 202 may fetch program instructions from the memory 204 and load the program instructions in the memory 204. After the program instructions are loaded into memory 204, the processor 202 may execute the program instructions. Some of the examples of the processor 202 may be a Graphical Processing Unit (GPU), a Central Processing Unit (CPU), a Reduced Instruction Set Computer (RISC) processor, an Application-Specific Integrated Circuit (ASIC) processor, a Complex Instruction Set Computer (CISC) processor, a coprocessor, and/or a combination thereof.

The memory 204 may include suitable logic, circuitry, and/or interfaces that may be configured to store program instructions executable by the processor 202. In certain embodiments, the memory 204 may be configured to store information such as, but not limited to, the generated images 112, the set of attributes 214A, and the set of sliders 214B. The memory 204 may further store the text-to-image model 104, the first language model 210 and the second language model 212.

The memory 204 may include computer-readable storage media for carrying or having computer-executable instructions or data structures stored thereon. Such computer-readable storage media may include any available media that may be accessed by a general-purpose or special-purpose computer, such as the processor 202. By way of example, and not limitation, such computer-readable storage media may include tangible or non-transitory computer-readable storage media, including but not limited to, a CPU cache, a Hard Disk Drive (HDD), a Solid-State Drive (SSD), Random Access Memory (RAM), Read-Only Memory (ROM), Electrically Erasable Programmable Read-Only Memory (EEPROM), Compact Disc Read-Only Memory (CD-ROM), a Secure Digital (SD) card, or other optical disk storage, magnetic disk storage or other magnetic storage devices, or flash memory devices (e.g., solid state memory devices). The computer-readable storage may also include any other storage medium which may be used to carry or store particular program code in the form of computer-executable instructions or data structures, and which may be accessed by a general-purpose or special-purpose computer. Combinations of the above may also be included within the scope of computer-readable storage media. Computer-executable instructions may include, for example, instructions and data configured to cause the processor 202 to perform a certain operation or group of operations associated with the electronic device 102.

The first language model 210 and the second language model 212 may be large language models (LLMs). An LLM may be an advanced AI system that may be trained on vast amounts of text data, enabling the LLM to perform a wide range of natural language processing tasks, such as translation, summarization, and text generation. The LLM, for example, may use transformer architectures, which allow them to process and generate text efficiently. During training, the LLM may learn a statistical relationship between words and phrases by analyzing large datasets. This training may enable the LLM to learn how to determine a context, syntax, and semantics associated with any natural language text, making them capable of generating coherent and contextually relevant responses. The large language models may include, for example, but not limited to, Generative Pre-trained Transformer (GPT) series, Bidirectional Encoder Representations from Transformers (BERT), Text-To-Text Transfer Transformer (T5), and the like.

The I/O device 206 may include suitable logic, circuitry, interfaces, and/or code that may be configured to receive a user input. The I/O device 206 may be further configured to provide an output in response to the user input. The I/O device 206 may include various input and output devices, which may be configured to communicate with the processor 202 and other components, such as the network interface 208. For example, the input may include the first image 116 and the output may include the second image 118. Examples of the input devices may include, but are not limited to, a touch screen, a keyboard, a mouse, a joystick, and/or a microphone. Examples of the output devices may include, but are not limited to, a display device 114. The I/O device 206 may be configured within the electronic device 102 or outside of the electronic device 102.

The network interface 208 may communicate via wireless communication with networks, such as the Internet, an Intranet, and/or a wireless network, such as a cellular telephone network, a wireless local area network (LAN) and/or a metropolitan area network (MAN). The wireless communication may use any of a plurality of communication standards, protocols and technologies, such as Global System for Mobile Communications (GSM), Enhanced Data GSM Environment (EDGE), wideband code division multiple access (W-CDMA), Long Term Evolution (LTE), code division multiple access (CDMA), time division multiple access (TDMA), Bluetooth, Wireless Fidelity (Wi-Fi) (such as IEEE 802.11a, IEEE 802.11b, IEEE 802.11g and/or IEEE 802.11n), voice over Internet Protocol (VoIP), light fidelity (Li-Fi), or Wi-MAX.

Modifications, additions, or omissions may be made to the example electronic device 102 without departing from the scope of the present disclosure. For example, in some embodiments, the example electronic device 102 may include any number of other components that may not be explicitly illustrated or described for the sake of brevity.

FIG. 3 is a diagram that illustrates an exemplary execution pipeline for generative AI-based image generation using attribute-based slider controls, in at least one embodiment described in the present disclosure. FIG. 3 may be described in conjunction with elements from FIG. 1 and FIG. 2. With reference to FIG. 3, an exemplary execution pipeline 300 is shown. The exemplary execution pipeline 300 may include a sequence of operations that may be executed by the processor 202 of the electronic device 102 of FIG. 1 for generative AI-based image generation using attribute-based slider controls.

The execution pipeline 300 may include operations, such as, reception of prompt 302, generation of a first image 304, generation of a set of attributes 306, generation of a set of questions 312, generation of slider independent questions 314A, generation of slider dependent questions 314B, alignment of images and texts 316A and 316B, determination of slider boundary values 318A, determination of an initial slider value 318B, generation of a set of sliders 310 (such as, a slider-1, a slider-2, ...and a slider-N), and merging of sliders 310A. The execution pipeline 300 may also include a set of attributes 308 (such as, an attribute-1 308A, an attribute-2 308B, ...and an attribute 308N), the generated image(s) 112, and an edited image or second image(s) 320.

At 302, the operation of reception of a prompt may be executed. The processor 202 may be configured to receive the prompt 102A indicative of a description of the first image 116 (e.g., the generated image 112) to be generated The exemplary prompt 102A may include, but is not limited to, 'a portrait of a young women', 'a fantasy character with long silver hair, glowing eyes, standing in an enchanted forest', 'child playing in a park with bright smile on face'. The prompt 102A may include a natural language description that may be an input for generation of the first image 116. The prompt 102A may be received as a user input using textual, gesture, tactile, or audio input devices associated with the electronic device 102.

At 304, the operation for generation of the first image may be executed. The processor 202 may be configured to generate the first image 116 (i.e., the generated images 112) based on the prompt 102A using the text-to-image model 104. The text-to-image model 104 may be a machine learning model that may be configured to generate images based on natural language descriptions. For example, if the received prompt 102A is 'a cat wearing a hat', the text-to-image model 104 may generate the image depicting a cat with a hat.

At 306, the operation for the generation of the set of attributes may be executed. The processor 202 may be configured to determine the set of attributes 214A associated with the description of the first image 116, based on the first language model (e.g., an LLM). The set of attributes 214A may include, age, hair color, expressions, hand gesture, eye movement, and the like. The set of attributes 214A may be adjusted based on user's requirement. The adjustments may be, for example, adding new attributes, updating the attribute, deleting the attribute, and the like. The set of attributes 214A may be generated based on the first language model 210. The first language model 210 may be an LLM. For example, the LLM may analyze the input prompt 102A to understand the various attributes described. The set of attributes may include objects, colors, sizes, positions, and other descriptive details. The LLM may extract the set of attributes 214A from the prompt 102A such as, 'a red apple on a wooden table'. The set of attributes 214A may be 'red', 'apple', 'wooden table'. The set of attributes 214A may be mapped to visual elements. This involves the visual representation of each attribute. For instance, 'red' may be mapped to specific shade of red, and apple may be mapped to the shape and texture of the apple. In an example, as shown in FIG. 3, the set of attributes 308 (such as, the attribute-1 308A, the attribute-2 308B, ...and the attribute-N) may be generated.

At 312, the operation for generation of the set of questions may be executed. The processor 202 may be configured to generate the set of questions associated with the prompt 102A, based on the second language model (e.g., an LLM). The set of attributes 214A may include, age, hair color, expressions, hand gesture, eye movement, and the like. The set of attributes 214A may be adjusted based on user's requirement. The adjustments may be, for example, adding new attributes, updating the attribute, deleting the attribute, and the like. The set of attributes 214A may be generated based on the first language model 210. The first language model 210 may be an LLM. For example, the LLM may analyze the input prompt 102A to determine the various attributes described. The set of attributes may include objects, colors, sizes, positions, and other descriptive details. The LLM may extract the set of attributes 214A from the prompt 102A such as, 'a red apple on a wooden table'. The set of attributes 214A may be 'red', 'apple', 'wooden table'. The set of attributes 214A may be mapped to visual elements. This involves the visual representation of each attribute. For instance, 'red' may be mapped to specific shade of red, and apple may be mapped to the shape and texture of the apple. In an example, as shown in FIG. 3, the set of attributes 308 (such as, the attribute-1 308A, the attribute-2 308B, ...and the attribute-N) may be generated. The questions may include, for example, 'is hair curly', 'is girl young', and the like.

At 314A, the operation for generation of the slider independent questions may be executed. The processor 202 may be configured to generate the slider independent questions. The set of questions may include the first set of questions corresponding to the slider independent questions. The generation of the slider boundary values may be based on the first set of questions. The slider boundary values may correspond to the first VQA model. For example, the first VQA model may be a computer vision model that may be configured to determine a context associated with an image and answer textual questions related to the context.

At 314B, an operation for generation of the slider dependent questions may be executed. The processor 202 may be configured to generate the slider dependent questions. The set of questions may include the second set of questions corresponding to the slider dependent questions. The generation of initial slider value may be based on the second set of questions. The generation of the initial slider value may correspond to the second VQA model. In some embodiments, the first VQA model may be same as the second VQA model. In yet some embodiments, the first VQA model may be different as the second VQA model. For example, the second VQA model may be a computer vision model that may be configured to determine a context associated with an image and answer textual questions related to the context.

At 316A and 316B, the operations for the alignment of images and texts alignment may be executed. The processor 202 may be configured to align an image (e.g., the generated image(s) 112) and the text from the prompt 102A. The VQA models may be used to perform the alignment of the generated image and the prompt 102A received as the input. The VQA models may be designed to answer the questions about the generated images 112 both in a visual content and a textual question. The VQA model may generate the set of questions. The set of questions may include the first set of questions and the second set of questions. The first set of questions may correspond to slider independent questions and the second set of questions may correspond to slider dependent questions. The generated image and the text within the prompt 102A may be combined using a fusion model. The fusion model may determine a relationship between the visual content of the generated image and the set of questions. In some embodiments, text prompts may be used to generate synthetic images that help in answering the question. This may involve using a vision-language model to translate the text prompt into a visual representation, which may then be analyzed to generate the answer. The slider boundary values may be generated based on the first set of questions. The initial slider value may be generated based on the second set of questions. The set of questions influenced by (for example, slider dependent questions) the set of sliders 214B may be sent to the VQA model along with generated images 112 to determine the correct slider value (e.g., the initial slider value). For instance, for the age slider, the relevant questions may be, "Is the person young?". The VQA model then selects the value that maximizes the probability of the response "Yes" to the question "Is the person young?" given the image. The questions that are not influenced by (for example, the slider independent questions) the set of sliders 214B may be sent to the VQA model along with the generated images 112 to determine the boundary slider value. For example, for the age slider, a question not affected might be, "is the person's hair curly?" The VQA model then selects the boundary value such that the probability of the response "Yes" to the question "Is the person's hair curly?" given the image is below a certain threshold.

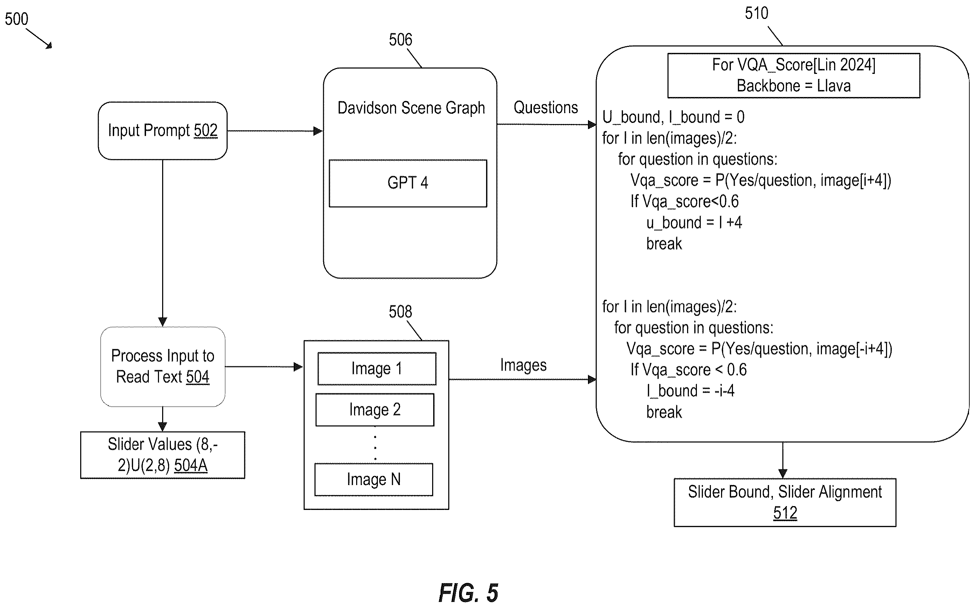

At 318A and 318B, the operations for determination of the slider boundary values and the initial slider value, respectively, may be executed. The processor 202 may be configured to generate the slider boundary values based on the first set of questions corresponding to the slider independent questions (determined, for example, at 314A). The processor 202 may be configured to generate the initial slider value based on the second set of questions corresponding to the slider dependent questions (determined, for example, at 314B). The set of sliders 214B may be generated based on the generated slider boundary values and initial slider value. The generation of the slider boundary values may be based on the first VQA model. The generation of the initial slider value may be based on the second VQA model. Details related to the generation of the slider boundary values and the initial slider value are described further, for example, in FIG. 5.

At 310, the operation for generation of the set of sliders 214B may be executed. The processor 202 may be configured to generate the slider boundary values and the initial slider value (as described, for example, at 318A and 318B). The processor 202 may generate the set of sliders 214B based on the generated slider boundary values and the initial slider value. The set of sliders 214B along with the initial slider value and the slider boundary values may be merged to generate the second image 118.

At 310A, the operation for merging of the sliders may be executed. The processor 202 may be configured to merge the set of sliders 214B using various techniques such as diffusion-based generative AI models, GANs, autoencoders, image blending techniques, feature extraction and manipulation, and the like. The user may provide an input associated with slider value variations to acquire a desired image from the original generated image 112. The second images (or edited images) 320 may be generated based on the slider variations associated with the user input. Thus, the values of the sliders may be merged to create the final image or edited image (for example, the second image 118 or the edited image 320).

Typically, Generative Adversarial Networks (GANs) may fail to identify directions for edits. When the user attempts to modify specific features within the generated image, the modification may lack clear guidance, making it challenging to achieve the desired changes. The problem may further be exacerbated by the inconsistent variations in image generation when adjusting sliders. The user may experience that even minor adjustments may result in unpredictable and nonuniform changes in the output. Hence, adjustments may require a lot of trial and error and may be time-consuming. The GAN may create images that closely resemble the training data, however, generating entirely new and diverse images that extend beyond the training set may remain a complex task. This limitation may reduce the versatility of GANs in applications that require a broad range of image outputs. The user often may face difficulties when initial alignment lacks clarity between the image and the prompt provided.

The disclosed approach may offer several advantages:
1. Flexible threshold - The sliders may be bounded with flexible thresholds covering various versions of the images or covering all sensical images.
2. Consistent and predictable slider variations - Consistent slider variations may enable precise adjustments, ensuring data input and improving overall effectiveness of slider variations.
3. Concept sliders - Concept sliders may allow precise control over individual attributes with minimal interference.
3. Initial alignment of image and prompt - Concept sliders may provide a more refined approach, allowing for precise adjustments to individual attributes without affecting other
4. Use of diffusion models - Utilizing diffusion models may show high fidelity image generation over GAN and directions of edits may be determined efficiently.

Conventional methods of prompt-based image generation may generate images based on the received prompt. This indicates the difficulty in determining how to adjust the model's parameters to achieve specific changes in generated images. Adjusting control parameters (for example, sliders) may result in unpredictable and inconsistent changes in the generated image. This inconsistency may make the GAN model difficult to fine-tune or control its output precisely. Further, GANs may fail to generate a wide variety of images outside their training data set. Also, current methods may not allow systematic and controlled manipulation of specific attributes within generated images through clear and understandable parameters. This makes it hard to explore and adjust individual attributes in a precise and controlled way.

The present disclosure may address these challenges by providing generative AI-based image generation using attribute-based slider controls. This approach may enable more efficient, consistent, and predictable slider variations improving slider driven image generation.

In an example, it may be difficult for a user to select which sliders are to be selected from a database of hundreds of sliders. The present disclosure enables retrieval of relevant sliders based on the received prompt 102A. Further, the electronic device 102 may also identify if a given attribute associated with prompt 102A may be modified by multiple sliders. Thus, the electronic device 102 may enable users to create custom sliders by recommending attributes for which the user may instruct the creation of a slider,

FIG. 4 is a diagram that illustrates an exemplary electronic User Interface (UI) indicating a set of sliders for exploring attribute space of a prompt, in accordance with an embodiment of the disclosure. FIG. 4 is described in conjunction with elements from FIG. 1, FIG. 2, and FIG. 3. With reference to FIG. 4, there is shown the exemplary electronic UI 400.

The electronic UI 400 may include various UI elements such as a text prompt UI element 402, an attribute selection UI element 410, a first generated image 408A, a second generated image 408B, a third generated image 408C, an attribute insertion UI element 412, a set of sliders 414, the generated images 112, image editing option 416, image selection option from a gallery 422, and the like. The electronic UI 400 may further include a UI element for display of the generated image 418, an image upload UI element 418A, a save button 420, and a UI element for selection of an image from a gallery 422.

The user may input the prompt 102A through the text prompt UI element 402 (such as, a textbox). The input prompt 102A may include, for example, a text 404, such as, 'a young girl with curly hair'. The user may click or press a button, for example, 'generate' 406 to submit the prompt 102A and generate images. Once the user enters the prompt 102A, the first image 116 may be generated and the generated image 112 may be displayed. The electronic UI 400 may also show multiple images based on user input. For example, the electronic UI 400 may render the first generated image 408A, the second generated image 408B, and the third generated image 408C. The generated images 112 may be saved and reused for further edits.

In an embodiment, the set of attributes 214A may be generated based on the prompt 102A. The prompt 102A may include the user input, for example, 'a young girl with curly hair'. The user may select the set of attributes 214A using the attribute selection UI element 410. The set of attributes 214A may be for example, 'age', as shown in FIG. 4. A drop-down feature may be provided to select multiple attributes based on user requirement. The electronic UI 400 may insert new attributes based on user inputs obtained using the attribute insertion UI element 412. One or more new attributes (such as, 'type of hair') may be added by inserting the attribute along with existing attributes (for example, age). The attribute insertion UI element 412 may function as an attribute filter and may not be limited to insertion of attributes. In some scenarios, an attribute may be deleted from the set of attributes 214A, through the attribute insertion UI element 412.

In an embodiment, based on the set of attributes 214A, the set of sliders 214B may be generated. In some aspects, each attribute of the set of attributes 214A may include one slider to edit the image based on variations of the slider. In an example, slider 'age' 414 is shown in FIG. 4. Each slider of the set of sliders 214B may include a predefined range of values. The user may adjust the set of sliders 214B to obtain a desired image. The predefined range of values may vary, for example between (-4, 4). The electronic UI 400 may include a UI element, such as, a button, to accept a user instruction of editing the image, after the image generation. For example, the image editing option 416 may be used by the user to edit the image further. Finally, the image may be displayed on a part of the electronic UI 400. The electronic UI 400 may include the UI element for selection of an image from a gallery 422 and the save button 420 to save the generated image 112. Also, the electronic UI 400 may have the image upload UI element 418A to upload an image to be edited from the gallery.

It should be noted that the electronic UI 400 of FIG. 4 is provided for exemplary purposes and should not be construed to limit the scope of the disclosure.

FIG. 5 is a diagram that illustrates an exemplary execution pipeline for determination of slider boundary values and initial slider value, in accordance with an embodiment of the disclosure. FIG. 5 is described in conjunction with elements from FIG. 1, FIG. 2, FIG. 3, FIG. 4. With reference to FIG. 5, there is shown an exemplary execution pipeline 500. The execution pipeline 500 may include operations such as, an operation for input of a prompt 502, an operation for text-to-image model application 504, an operation for slider value selection 504A, and an operation for slider bounds and slider alignment determination 512. The operations of the execution pipeline 500 may be executed by any computing device, such as, the electronic device 102 or the processor 202.

At 502, the operation for input of a prompt may be executed. The processor 202 may be configured to receive a prompt input, for example, the prompt 102A. The prompt 102A may be for example, 'a young girl with curly hair'. The user may enter the prompt 102A to generate an image.

At 504, the operation for text-to-image model application may be executed. The processor 202 may be configured to apply the text-to-image model 104 on the received prompt 102A. The text-to-image model 104 may be Low Rank Adaptation (LoRA) model. The LoRA model may be a technique used in machine learning to leverage low-rank decomposition and reduce a number of parameters of a model to efficiently fine-tune the model. This may involve decomposing weight matrices of the text-to-image model 104 into lower-dimensional matrices, which are easier to train. The text-to-image model 104 may generate the first image based on the prompt 102A.

Thus, the text-to-image model 104 may be a machine learning model that may be configured to generate images (for example, first image 116) based on natural language descriptions. The prompt 102A may be fed to the text-to-image model 104 to obtain the generated images 112 that match the description in the prompt 102A. For example, if the user inputs the prompt 'a cat wearing a hat', the model may generate the image depicting the cat with the hat. The text-to-image model 104 may include for example, diffusion-based generative AI models, GANs, autoencoders, image blending techniques, and feature extraction and manipulation models.

At 506, the input prompt 102A may be received at a Davidson Scene Graph (DSG). The DSG may be an automatic, graph-based framework for question generation and answering (QG/A). It may enhance reliability of fine-grained evaluations for text-to-image generation models. The DSG may generate indivisible and unique questions organized in dependency graphs. By organizing questions in dependency graphs, DSG may ensure comprehensive semantic coverage. This helps in accurately assessing the alignment between the generated images 112 and the input prompt 102A. The DSG may sidestep inconsistent answers by structuring questions in a way that avoids contradictions. The input prompt 102A may be analyzed to generate a set of contextually relevant questions. These questions may be designed to probe various aspects of the image that align with the text. For example, for the input text 'a red car parked under a tree' the DSG may generate questions such as, 'is there a car in the image?', 'what color is the car?', 'is the car parked under something?', 'what is the car parked under?'. The questions may be answered by a VQA model, and the answers may be compared to the expected responses to evaluate image's accuracy. The DSG may correspond to a large-language model (LLM), such as, but not limited to, Generative Pre-trained Transformer (GPT) series, Bidirectional Encoder Representations from Transformers (BERT), Text-To-Text Transfer Transformer (T5), and the like.

At 504A, the operation for slider values selection may be executed. The processor 202 may be configured to select the slider values, based on the application of the text-to-image model 104 on the prompt 102A. As an example, the slider values may be initially selected as (-8,-2) U (2,8). However, the selected slider values may not be limited to (-8,-2) U (2,8), and may be any range of natural numbers, without departure from the scope of the disclosure.

At 508, the operation for generation of a set of images (for example, a set of third images) may be executed. The processor 202 may generate the set of images based on the various slider values associated with a predefined range. For example, the set of images may include an image-1 corresponding to a slider value of "2", an image-2 corresponding to the slider value of "3", ...and an image-N corresponding to the slider value of "-2". The set of images and the set of questions may be used to determine a Vision Question Answer (VQA) score.

At 510, the operation for VQA score determination may be executed. The processor 202 may determine, by a VQA model, the VQA score based on the set of third images (determined at 508) and the set of questions (determined at 506). The determination of the VQA score may be represented by the following pseudocode:

```
U_bound, L_bound = 0
 for I in len(images)/2:
   for question in questions:
    VQA_score = P(Yes/question, image[i+4])
    If VQA_score<0.6
      U_bound = I +4
      break
 for I in len(images)/2:
  for question in questions:
   VQA_score = P(Yes/question, image[-i-4])
    If VQA_score < 0.6
      L_bound = -i-4
      break
```

The processor 202 may compare the VQA score with a first predetermined value. The first predetermined value may be, for example, but not limited to a range such as, (0,4). The processor 202 may update a slider value (for example, slider boundary values) to a next value based on the VQA score being less than the first predetermined value. Further, the processor 202 may determine an upper bound value of the slider boundary values based on the VQA score being more than the first predetermined value.

For example, to determine the upper bound value, with reference to the pseudocode for determination of the VQA score method, "U_bound" (a variable for upper bound) and "L_bound" (a variable for lower bound) may be initialized to a value of "0". These variables may be used to store upper and lower boundary values, respectively. An outer loop may iterate through half of the set of third images, for example, for len(images)/2 times. "I" may represent a loop variable that may represent a current index in a list of the set of third images. For each image, the inner loop may iterate through a list of questions. The "VQA_score" may be calculated using a function P(Yes/question, image[i+4]). This function may represent a VQA model that predicts a probability of the answer being "Yes" given the question and the image (for example, one of the set of third images). The image [i+4] means that for each iteration of "I", the function may evaluate an image at the index "i+4". If the "VQA_score" is less than "0.6", it may indicate that a confidence of the VQA model in the answer being "Yes" is low. When the condition is met, "U_bound" may be set to a value of "i+4", and the inner loop breaks. This means the upper boundary may be determined based on the index where the VQA score first falls below "0.6".

The processor 202 may compare the VQA score with a second predetermined value. Further, the processor 202 may update the slider boundary values to a previous value, based on the VQA score being less than the second predetermined value. The processor 202 may determine a lower bound value of the slider boundary values, based on the VQA score being more than the second predetermined value.

For example, to determine the lower bound value, with reference to the pseudocode, "U_bound" and "L_bound" may be initialized to "0". These variables will be used to store the upper and lower boundary values, respectively. The outer loop iterates through half of the set of third images, for example, for len(images)/2 times. This means if there are 10 images, the loop will run 5 times. "I" may represent a loop variable that may represent a current index in a list of the set of third images. For each image, the inner loop iterates through a list of questions. "VQA_score" may be calculated using a function P(Yes/question, image[-i-4]). This function may represent the VQA model that predicts the probability of the answer being "Yes" given a question and an image and image[-i-4] represents each iteration of "I", the function may evaluate the image at the index "-i-4". The negative index "-i" starts counting from the end of the list. If the "VQA_score" is less than "0.6", it may indicate a confidence of the VQA model in the answer being "Yes" is low. When this condition is met, "L_bound" may be set to -i-4, and the inner loop breaks. This means the lower boundary is determined based on the index where the VQA score first falls below "0.6".

At 512, the operation for slider bounds and slider alignment determination may be executed. The processor 202 may determine slider bounds and perform slider alignment. The slider bounds may limit a range within which a slider may operate. The slider bounds may typically be defined by an upper bound and a lower bound, which may constrain the range of values the slider may take. The slider alignment may refer to positioning the slider within its defined bounds. The slider alignment may ensure that the slider operates smoothly and accurately within its range.

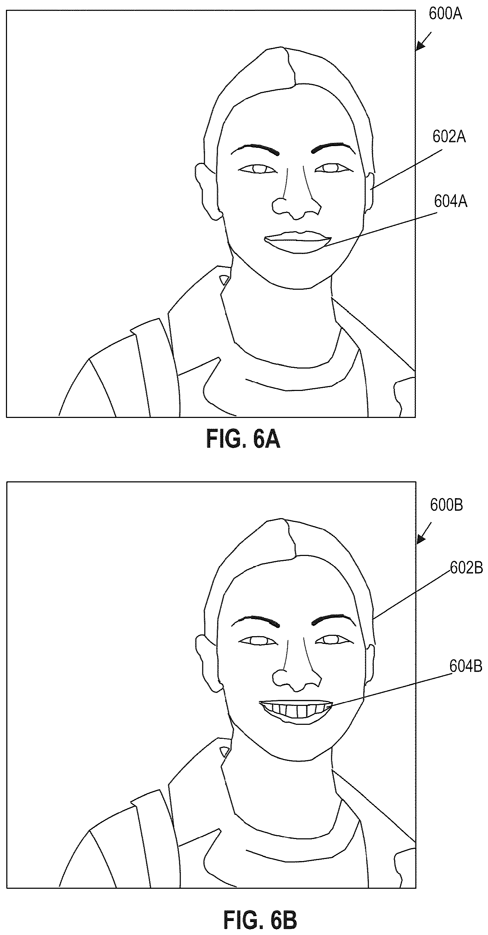

FIG. 6A and FIG. 6B are diagrams that collectively illustrate a scenario of generated images based on variation of slider values, in accordance with an embodiment of the disclosure. FIG. 6A and FIG. 6B is described in conjunction with elements from FIG. 1, FIG. 2, and FIG. 3, FIG. 4, and FIG. 5.

With reference to FIG. 6A, there is shown an exemplary first scenario 600A that may represent an image of a person 602A. The initial slider value may be provided for the user to select the best alignment with the prompt 102A. For example, for the prompt 102A, the first image 116 may be generated. The image of the person 602A may be a photograph of the person with a slight smile (denoted by 604A). which may correspond to features such as, the face of the person 602A, teeth not visible, with a bokeh street background, a realistic effect, and an "8k" resolution. The user may be provided with a smile slider to adjust an extent of smile of the person 602A based on a requirement of the user. For example, generated image of the person 602A may correspond to the slider value of "-2". The slider value may vary between, for example, (-4 to 4), and the user may select the slider value based on a desired output.

With reference to FIG. 6B, there is shown an exemplary second scenario 600B that may represent an image of a person 602B. The second scenario 600B may show a slider variation performed by the user based on a requirement of the user or the prompt 102A. For example, the image of the person 602B may be a photograph of the person 602B smiling, teeth visible, with a bokeh street background, a realistic effect, and an "8k" resolution. The image 600B may be obtained by varying the slider value to, for example, "0".

It should be noted that the first scenario 600A of FIG. 6A and the second scenario 600B of FIG. 6B are for exemplary purposes and should not be construed to limit the scope of the disclosure.

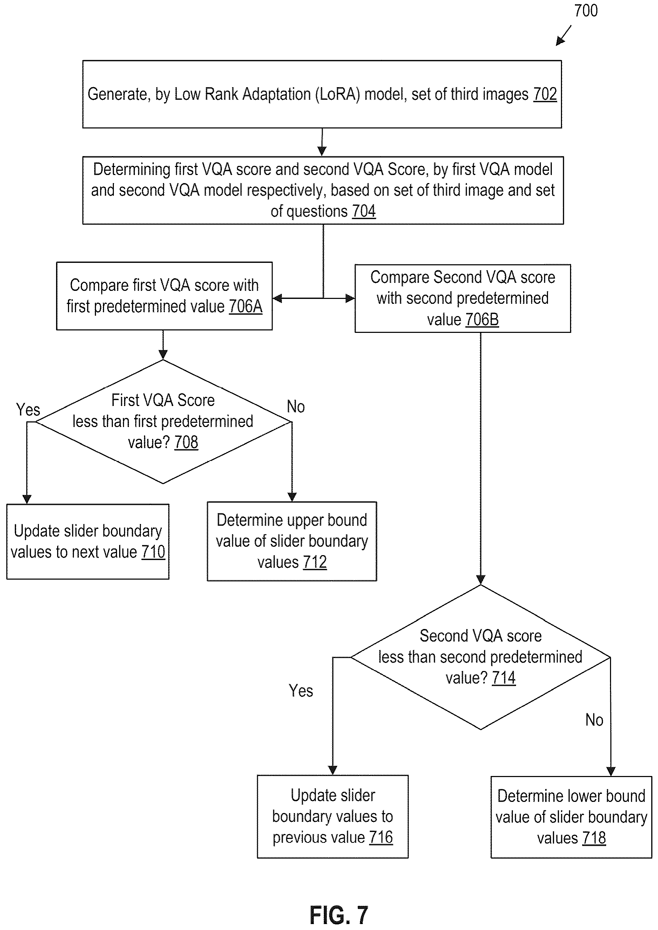

FIG. 7 is a diagram that illustrates a flowchart for a method of determining slider boundary values based on Vision Question Answer (VQA) score, in accordance with an embodiment of the disclosure. FIG. 7 is described in conjunction with elements from FIG. 1, FIG. 2, FIG. 3, FIG. 4, FIG. 5, FIG. 6A, and FIG.6B. With reference to FIG. 7, there is shown an exemplary flowchart 700 of a method for determining slider boundary values based on a VQA score. The flowchart 700 may include operations 702 to 718, which may be executed by the processor 202 (of FIG. 2) of the electronic device 102 (of FIG. 1).

At 702, a set of third images may be generated by a Low Rank Adaptation (LoRA) model. The processor 202 may be configured to generate the set of third images based on the LoRA model. The prompt 102A may be provided as an input to the LoRA model. The LoRA model may be a technique used in machine learning to leverage low-rank decomposition and reduce a number of parameters of a model to efficiently fine-tune the model. This may involve decomposing weight matrices of the text-to-image model 104 into lower-dimensional matrices, which are easier to train. The text-to-image model 104 may generate the set of third images based on the prompt 102A and the LoRA model. The LoRA model may generate the set of third images with different slider values for determining the VQA scores. The VQA score may be determined based on the first VQA model using the set of third image and the set of questions. The first VQA model may be same as the second VQA model. In some embodiments, the first VQA model may be different from the second VQA model. Details related to image generation are described further, for example, in FIG. 3 and FIG, 5

At 704, a first VQA score may be determined by the first VQA model and a second VQA score may be determined by the second VQA model, based on set of third images and set of questions. The processor 202 may be configured to determine the first VQA score, by the first VQA model, based on the set of third image and the set of questions (such as, the first set of questions corresponding to the slider independent questions). The processor 202 may be configured to determine the second VQA score, by the second VQA model, based on the set of third image and the set of questions (such as, the second set of questions corresponding to the slider dependent questions). Based on the first VQA score the slider boundary values may be determined, and based on the second VQA score the initial slider value may be determined. The determination of the first VQA score and the second VQA is described further, for example, in FIG. 3 and FIG. 5.

At 706A, the first VQA score may be compared with a first predetermined value. The processor 202 may be configured to compare the first VQA score of the generated set of third images with the first predetermined value. The first predetermined value may correspond to an average of VQA scores. The first VQA score may be determined based on the first VQA model that may be represented using a function P(Yes/question, image[i+4]). The function may represent the first VQA model that predicts the probability of the answer being "Yes" given the question (e.g., the first set of questions) and the set of third image.

At 708, it may be determined whether the first VQA score is less than the first predetermined value. The processor 202 may be configured to compare the first VQA score with the first predetermined value. In case, the first VQA score is less than the first predetermined value, control may be passed to 710. Otherwise, control may be passed to 712.

At 710, slider boundary values may be updated to a next value. The processor 202 may be configured to update the slider boundary values to the next value, based on the first VQA score being less than the first predetermined value. For example, the first VQA score may be less than the first predetermined value. In such a case, if a slider boundary value is "2", then the slider boundary value may be moved to the next value, that is, "3".

At 712, an upper bound value of the slider boundary values may be determined. The processor 202 may be configured to determine the upper bound value of the slider boundary value, based on the first VQA score being greater than the first predetermined value. For example, the first VQA score may be greater than the first predetermined value. In such a case, if the first VQA score is "5", the upper bound value of the slider boundary values may be "5".

At 706B, the second VQA score may be compared with a second predetermined value. The processor 202 may be configured to compare the second VQA score of the generated set of third images with the second predetermined value. The second predetermined value may correspond to an average of VQA scores. The second VQA score may be determined based on the second VQA model that may be represented using a function P(Yes/question, image[-i-4]). The function may represent the second VQA model that predicts the probability of the answer being "Yes" given the question (e.g., the second set of questions) and the set of third image.

At 714, it may be determined whether the second VQA score is less than the second predetermined value. The processor 202 may be configured to compare the second VQA score with the second predetermined value. In case, the second VQA score is less than the second predetermined value, control may be passed to 716. Otherwise, control may be passed to 718.

At 716, slider boundary values may be updated to a previous value. The processor 202 may be configured to update the slider boundary values to the previous value, based on the second VQA score being less than the second predetermined value. For example, the second VQA score may be less than the second predetermined value. In such a case, if a slider boundary value is "-2", then the slider boundary value may be moved to the previous value, that is, "-3".

At 718, a lower bound value of the slider boundary values may be determined. The processor 202 may be configured to determine the lower bound value of the slider boundary value, based on the second VQA score being greater than the second predetermined value. For example, the second VQA score may be greater than the second predetermined value. In such a case, if the second VQA score is "5", the lower bound value of the slider boundary values may be "5". Control may pass to end.

Although the flowchart 700 is illustrated as discrete operations, such as, 702, 704, 706A, 706B, 708, 710, 712, 714, 716, and 718, the disclosure is not so limited. However, in certain embodiments, such discrete operations may be further divided into additional operations, combined into fewer operations, or eliminated, depending on the particular implementation without detracting from the essence of the disclosed embodiments.

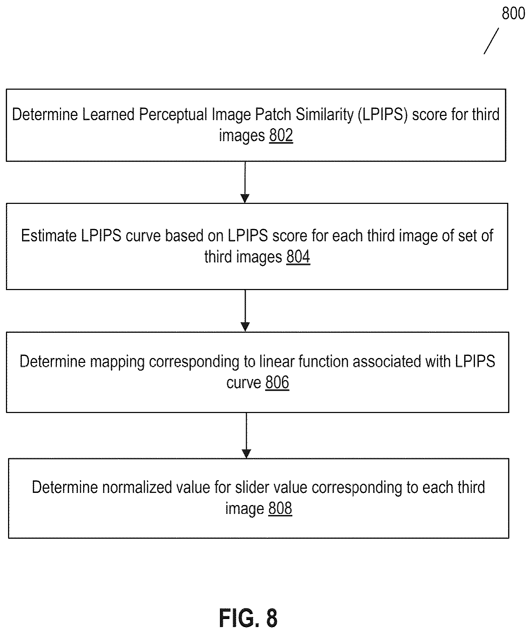

FIG. 8 is a diagram that illustrates a flowchart for a method of determining a normalized value for a slider value corresponding to a third image, in accordance with an embodiment of the disclosure. FIG. 8 is described in conjunction with elements from FIG. 1, FIG. 2, FIG. 3, FIG. 4, FIG. 5, FIG. 6A, FIG.6B, and FIG. 7. With reference to FIG. 8, there is shown an exemplary flowchart 800 of a method of determining a normalized slider value corresponding to an image. The flowchart 800 may include operations 802 to 808, which may be executed by the processor 202 (of FIG. 2) of the electronic device 102 (of FIG. 1).

At 802, a Learned Perceptual image Patch Similarity (LPIPS) score may be determination for the set of third images, where each third image may correspond to a slider value. The processor 202 may be configured to determine LPIPS score for the set of third images. Each third image of the set of third images may correspond to a slider value. The LPIPS score may be used to measure the perceptual similarity between two images. The LPIPS corresponds to a deep learning-based metric that compares two images by passing them through a pre-trained neural network and computing the distance between their feature representations. The LPIPS score may be determined by loading each third image of the set of images and a reference image. The pre-trained LPIPS model may be used to obtain a similarity score.

At 804, an LPIPS curve may be estimated based on the LPIPS score for each third image of the set of third images. The processor 202 may be configured to estimate the LPIPS curve based on the LPIPS score for each third image of the set of third images. The estimation of the LPIPS curve may include collecting LPIPS scores, fitting a function to the LPIPS scores, and then using the fitted function to determine or predict perceptual similarity trends. The LPIPS scores may be organized into a structured format and a mathematical model may be selected to represent the relationship between the LPIPS scores and the corresponding variables. A statistical or machine learning (ML) model may be selected to fit the chosen model to data including the collected LPIPS scores. This involves finding the parameters of the statistical or ML model that best describe the data. The performance of the fitted model may be assessed using appropriate metrics (for example, R-squared error and mean squared error) to ensure that the LPIPS curve accurately represents the relationships. Once it is assessed that the LPIPS curve accurately represents the relationships, the LPIPS curve may be used to predict LPIPS scores for new datapoints.

At 806, a mapping corresponding to a linear function associated with the LPIPS curve may be determined. The processor 202 may be configured to determine the mapping corresponds to the linear function associated with the LPIPS curve. A linear regression may be used to fit a linear model on the LPIPS scores. The performance of the linear model may be assessed using appropriate metrics. The fitted linear model may be used to predict the LPIPS scores for the new data points or to understand the underlying trends.

At 808, a normalized value for the slider value corresponding to each third image of the set of third images may be determined, based on the mapping. The processor 202 may be configured to determine the normalized value for the slider corresponding to each third image of the set of third images based on the mapping. The slider value may be normalized based on the fitted linear model to ensure that each slider value falls within a specific range, such as, between 0 to 1. Control may pass to end.

Although the flowchart 800 is illustrated as discrete operations, such as, 802, 804, 80B, and 808, the disclosure is not so limited. However, in certain embodiments, such discrete operations may be further divided into additional operations, combined into fewer operations, or eliminated, depending on the particular implementation without detracting from the essence of the disclosed embodiments.

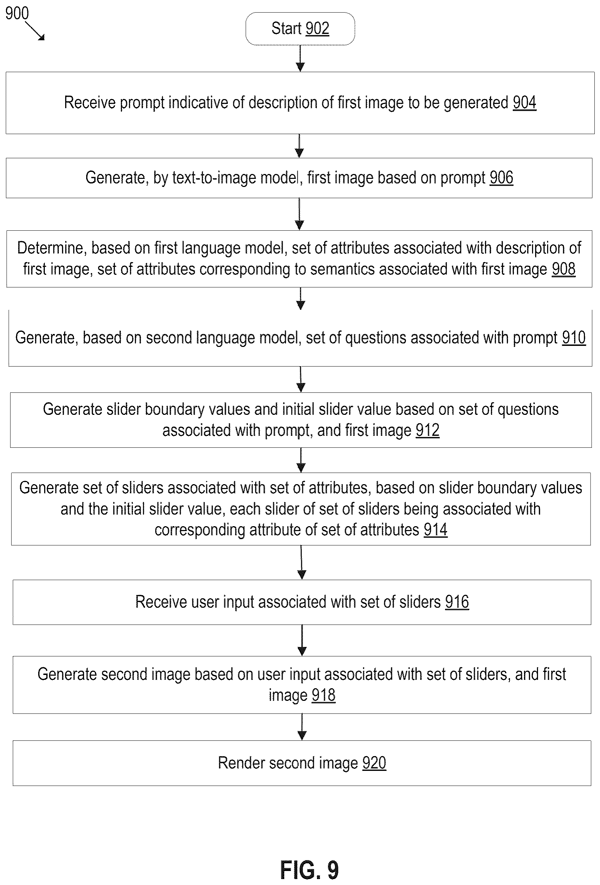

FIG. 9 is a diagram that illustrates a flowchart for a method of generative AI-based image generation using attribute-based slider controls, in accordance with an embodiment of the disclosure. FIG. 9 is described in conjunction with elements from FIG. 1, FIG. 2, FIG. 3, FIG. 4, FIG. 5, FIG. 6A, FIG. 6B, FIG. 7 and FIG. 8. With reference to FIG. 9, there is shown an exemplary flowchart 900 of a method of generative AI-based image generation using attribute-based slider controls. The flowchart 900 may include operations 902 to 920, which may be executed by the processor 202 (of FIG. 2) of the electronic device 102 (of FIG. 1). The flowchart 900 may start at 902 and proceed to 904.

At 904, a prompt indicative of a description of a first image to be generated may be received. The processor 202 may be configured to receive the prompt 102A indicative of the description of the first image 116 to be generated. The prompt 102A may be received from a user or any electronic device. The prompt 102A may be a textual prompt or an image saved in any database or taken from the user gallery. The image may be, for example, but not limited to, realistic images, cartoon images, paintings, and the like. For example, the prompt 102A may be 'a young girl with curly hair'. The receipt of the prompt is described further, for example, in FIG. 3.

At 906, the first image may be generated by a text-to-image model based on the prompt. The processor 202 may be configured to generate the first image 116 based on the prompt 102A by the text-to-image model 104. The first image 116 may be, for example, but not limited to, realistic images, cartoon images, paintings, and the like generated based on the prompt 102A. The text-to-image model 104 may use machine learning techniques such as a GAN model or a diffusion model to create images that match the given text (i.e., the prompt 102A). The processor 202 may convert the input text into numerical representation (or encoded text) using techniques such as embeddings, or transformers. This may capture semantic meanings of the text. The encoded text may be fed into a generative model which creates an image that aligns the textual description. This process may involve multiple layers of neural networks that progressively refine the image. The text-to-image model 104 may generate the image based on the prompt 102A indicative of the description. The generation of the first image is described further, for example, in FIG. 3.

At 908, a set of attributes associated with the description of the first image may be determined, based on a first language model, where the set of attributes may correspond to semantics associated with the first image. The processor 202 may be configured to the set of attributes 214A associated with the description of the first image 116 based on the first language model 210. The set of attributes 214A may correspond to semantics associated with the first image 116. In an embodiment, the set of attributes 214A may include, but not limited to, age of the person, hair color of the person, facial expression of the person, body-built type of the person, height of the person, direction of the face of the person, or gender of the person. Considering an example of the prompt 'a young girl with curly hair'. The set of attributes 214A may be, for example, but not limited to, 'young', 'hair', or 'girl. The determination of the set of attributes is described further, for example, in FIG. 3.

At 910, a set of questions associated with the prompt may be generated based on a second language model. The processor 202 may be configured to generate the set of questions associated with the prompt 102A, based on the second language model 212. The first language model 210 and the second language model 212 may correspond to the LLM. In an embodiment, the first language model 210 may be same as the second language model 212. In another embodiment, the first language model 210 may be different from the second language model 212. An LLM may be an advanced AI system that may be trained on vast amounts of text data, enabling the LLM to perform a wide range of natural language processing tasks, such as translation, summarization, and text generation. The LLM, for example, may use transformer architectures, which allow them to process and generate text efficiently. During training, the LLM may learn a statistical relationship between words and phrases by analyzing large datasets. This training may enable the LLM to learn how to determine a context, syntax, and semantics associated with any natural language text, making them capable of generating coherent and contextually relevant responses. The large language models may include, for example, but not limited to, Generative Pre-trained Transformer (GPT) series, Bidirectional Encoder Representations from Transformers (BERT), Text-To-Text Transfer Transformer (T5), and the like. The generation of the set of questions is described further, for example, in FIG. 3.

At 912, slider boundary values and an initial slider value may be generated based on the set of questions associated with the prompt 102A, and the first image 116. The processor 202 may be configured to generate the slider boundary values and the initial slider value based on the set of questions associated with the prompt 102A, and the first image 116. The generation of the slider boundary values, and the initial slider value is described further, for example, in FIG. 3.

At 914, a set of sliders associated with the set of attributes may be generated based on the slider boundary values and the initial slider value, where each slider of the set of sliders is associated with corresponding attribute of set of attributes. The processor 202 may be configured to generate the set of sliders 214B associated with the set of attributes 214A, based on the slider boundary values and the initial slider value. Each slider of the set of sliders 214B may be associated with a corresponding attribute of the set of attributes 214A. The slider boundary values may indicate the range of the slider values within which the user may generate various images by varying the slider values. The initial slider value may indicate the initial value of the slider at which the slider value may be initiated, and the user may generate various images by varying the slider values. The generation of the slider boundary values, and the initial slider value may be based on the set of questions and the first image 116. The set of questions may be generated based on the first VQA model and the second VQA model. The first VQA model may be same as the second VQA model. In some embodiments, the first VQA model may be different than the second VQA model. The first VQA score and the second VQA score may be compared with a predetermined value (for example, a first predetermined value and a second predetermined value, respectively). The slider boundary values may be updated to the next value based on the first VQA score being less than the first predetermined value. The upper bound value of the slider boundary values may be determined based on the first VQA score being more than the first predetermined value.

In another embodiment, the second VQA score may be compared with the second predetermined value. The initial slider value may be updated based on the second VQA score being less than the second predetermined value, The lower bound value may be determined for the initial slider value, based on the second VQA score being more than the second predetermined value. The first predetermined value and the second predetermined value may be same. In some embodiments, the first predetermined value and the second predetermined value may be different.

At 916, a user input associated with the set of sliders may be received. The processor 202 may be configured to receive the user input associated with the set of sliders 214B. The user may provide the input by varying the set of slider values. The user may vary one or more sliders of the set of sliders 214B. The reception of the user input is described further, for example, in FIG. 3.

At 918, a second image may be generated based on the user input associated with the set of sliders, and the first image. The processor 202 may be configured to generate the second image 118 based on the user input associated with the set of sliders 214B, and the first image 116. The second image 118 may be generated by varying the slider values. The user may vary the slider values based on the requirements. In an example of 'a young girl with curly hair', the text-to-image model 104 may generate an image based on the prompt "a young girl with curly hair". The user may provide the user input associated with the set of sliders 214B. The set of sliders 214B may be for example, but not limited to, 'age'. The user may vary the slider value of the age based a requirement. For instance, if the slider value was set at "4", the user may select the slider value "2", indicating that the user wants that the girl within the image is younger. The generation of the second image is described further, for example, in FIG. 3.

At 920, the second image may be rendered. The processor 202 may be configured to render the second image 118. The display device 114 may display the first image 116 and the second image 118. The display device 114 may display real-time changes in the slider values, based on the user input. The display device 114 may display more than one image on the display simultaneously. The rendering of the second image is described further, for example, in FIG. 4. Control may pass to end.

Although the flowchart 900 is illustrated as discrete operations, such as, 902, 904, 906, 908, 910, 912, 914, 916, 918, and 920, the disclosure is not so limited. However, in certain embodiments, such discrete operations may be further divided into additional operations, combined into fewer operations, or eliminated, depending on the particular implementation without detracting from the essence of the disclosed embodiments.

Various embodiments of the disclosure may provide one or more non-transitory computer-readable storage media configured to store instructions that, in response to being executed, cause an electronic device (such as the electronic device 102) to perform operations. The operations may include receiving a prompt (e.g., the prompt 102A) indicative of a description of a first image (e.g., the first image 116) to be generated. The operations may further include generating, by a text-to-image model (e.g., the text-to-image model 104), the first image 116 based on the prompt 102A. The operations may include determining, based on a first language model (e.g., the first language model 210). A set of attributes (e.g., the set of attributes 214A) may be associated with the description of the first image 116. Further, the set of attributes 214A may correspond to semantics associated with the first image 116. The operations may further include generating, based on a second language model (e.g., the second language model 212), a set of questions associated with the prompt 102A. The operations may include generating slider boundary values, and an initial slider value based on the set of questions associated with the prompt 102A, and the first image 116. The operations may further include generating a set of sliders (e.g., the set of sliders 214B) associated with the set of attributes 214A, based on the slider boundary values and the initial slide value. Each slider of the set of sliders 214B may be associated with a corresponding attribute of the set of attributes 214A. The operations may include receiving a user input associated with the set of sliders 214B. The operations may further include generating a second image (e.g., the second image 118) based on the user input associated with the set of sliders 214B, and the first image 116 to render the second image 118.

As used in the present disclosure, the terms "module" or "component" may refer to specific hardware implementations configured to perform the actions of the module or component and/or software objects or software routines that may be stored on and/or executed by general purpose hardware (e.g., computer-readable media, processing devices, etc.) of the computing system. In some embodiments, the different components, modules, engines, and services described in the present disclosure may be implemented as objects or processes that execute on the computing system (e.g., as separate threads). While some of the system and methods described in the present disclosure are generally described as being implemented in software (stored on and/or executed by general purpose hardware), specific hardware implementations or a combination of software and specific hardware implementations are also possible and contemplated. In this description, a "computing entity" may be any computing system as previously defined in the present disclosure, or any module or combination of modulates running on a computing system.

Terms used in the present disclosure and especially in the appended claims (e.g., bodies of the appended claims) are generally intended as "open" terms (e.g., the term "including" should be interpreted as "including, but not limited to," the term "having" should be interpreted as "having at least," the term "includes" should be interpreted as "includes, but is not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is explicitly recited, one of ordinary skill in the art will recognize that such recitations should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc.

Further, any disjunctive word or phrase presenting two or more alternative terms, whether in the description, claims, or drawings, should be understood to contemplate the possibilities of including one of the terms, either of the terms, or both terms. For example, the phrase "A or B" should be understood to include the possibilities of "A" or "B" or "A and B."

All examples and conditional language recited in the present disclosure are intended for pedagogical objects to aid the reader in understanding the present disclosure and the concepts contributed by the inventor to furthering the art and are to be construed as being without limitation to such specifically recited examples and conditions. Although embodiments of the present disclosure have been described in detail, various changes, substitutions, and alterations could be made hereto without departing from the spirit and scope of the present disclosure.

## Claims

1. A method, executed by a processor, comprising:
receiving a prompt indicative of a description of a first image to be generated;
generating, by a text-to-image model, the first image based on the prompt;
determining, based on a first language model, a set of attributes associated with the description of the first image, the set of attributes corresponding to semantics associated with the first image;
generating, based on a second language model, a set of questions associated with the prompt;
generating slider boundary values and an initial slider value based on the set of questions associated with the prompt, and the first image;
generating a set of sliders associated with the set of attributes, based on the slider boundary values and the initial slide value, each slider of the set of sliders being associated with a corresponding attribute of the set of attributes;
receiving a user input associated with the set of sliders;
generating a second image based on the user input associated with the set of sliders, and the first image; and
rendering the second image.

2. The method according to claim 1, wherein
the set of questions includes at least one of: a first set of questions corresponding to slider independent questions, and a second set of questions corresponding to slider dependent questions,
the generation of the slider boundary values is based on the first set of questions, and
the generation of the initial slider value is based on the second set of questions.

3. The method according to claim 1, wherein the text-to-image model corresponds to a Generative Adversarial Network (GAN) model.

4. The method according to claim 1, wherein each of the first language model and the second language model corresponds to a Large Language Model (LLM).

5. The method according to claim 1, wherein the first language model is same as the second language model.

6. The method according to claim 1, wherein the first language model is different from the second language model.

7. The method according to claim 1, wherein the set of attributes correspond to at least one of:
an age of a person,
a hair color of the person,
facial expressions of the person,
a body-built type of the person,
a height of the person,'
a direction of a face of the person, or
a gender of the person.

8. The method according to claim 1, wherein
the generation of the slider boundary values correspond to a first visual question answering (VQA) model, and
the generation of the initial slider value corresponds to a second VQA model.

9. The method according to claim 8, wherein the first VQA model is same as the second VQA model.

10. The method according to claim 8, wherein the first VQA model is different from the second VQA model.

11. The method according to claim 8, further comprising:
generating, by a Low Rank Adaptation (LoRA) model, a set of third images;
determining a first VQA score, by the first VQA model, based on the set of third image and the set of questions;
comparing the first VQA score with a first predetermined value;
updating the slider boundary values to a next value, based on the first VQA score being less than the first predetermined value; and
determining an upper bound value of the slider boundary values, based on the first VQA score being more than the first predetermined value.

12. The method according to claim 11, further comprising:
determining a second VQA score, by the second VQA model, based on the set of third image and the set of questions;
comparing the second VQA score with a second predetermined value;
updating the slider boundary values to a previous value, based on the second VQA score being less than the second predetermined value; and
determining a lower bound value of the slider boundary values, based on the second VQA score being more than the second predetermined value.

13. The method according to claim 11, further comprising:
determining a Learned Perceptual Image Patch Similarity (LPIPS) score for each third image of the set of third images, each third image corresponding to a slider value;
estimating an LPIPS curve based on the LPIPS score for each third image of the set of third images;
determining a mapping corresponding to a linear function associated with the LPIPS curve; and
determining a normalized value for the slider value corresponding to each third image of the set of third images, based on the mapping.

14. A non-transitory computer-readable storage medium configured to store instructions that, in response to being executed, causes a system to perform operations, the operations comprising:
receiving a prompt indicative of a description of a first image to be generated;
generating, by a text-to-image model, the first image based on the prompt;
determining, based on a first language model, a set of attributes associated with the description of the first image, the set of attributes corresponding to semantics associated with the first image;
generating, based on a second language model, a set of questions associated with the prompt;
generating slider boundary values and an initial slider value based on the set of questions associated with the prompt, and the first image;
generating a set of sliders associated with the set of attributes, based on the slider boundary values and the initial slide value, each slider of the set of sliders being associated with a corresponding attribute of the set of attributes;
receiving a user input associated with the set of sliders;
generating a second image based on the user input associated with the set of sliders, and the first image; and
rendering the second image.

15. The non-transitory computer-readable storage medium according to claim 14, wherein
the set of questions includes at least one of: a first set of questions corresponding to slider independent questions, and a second set of questions corresponding to slider dependent questions,
the generation of the slider boundary values is based on the first set of questions, and
the generation of the initial slider value is based on the second set of questions.

16. The non-transitory computer-readable storage medium according to claim 14, wherein
the generation of the slider boundary values correspond to a first visual question answering (VQA) model, and
the generation of the initial slider value corresponds to a second VQA model.

17. The non-transitory computer-readable storage medium according to claim 16, the operations further comprising:
generating, by a Low Rank Adaptation (LoRA) model, a set of third images;
determining a VQA score, by the first VQA model, based on the set of third images and the set of questions;
comparing the VQA score with a first predetermined value;
updating the slider boundary values to a next value, based on the VQA score being less than the first predetermined value; and
determining an upper bound value of the slider boundary values, based on the VQA score being more than the first predetermined value.

18. The non-transitory computer-readable storage medium according to claim 17, the operations further comprising:
comparing the VQA score with a second predetermined value; and
updating the slider boundary values to a previous value, based on the VQA score being less than the second predetermined value; and
determining a lower bound value of the slider boundary values, based on the VQA score being more than the second predetermined value.

19. The non-transitory computer-readable storage medium according to claim 17, the operations further comprising:
determining a Learned Perceptual Image Patch Similarity (LPIPS) score for each third image of the set of third images, each third image corresponding to a slider value;
estimating an LPIPS curve based on the LPIPS score for each third image of the set of third images;
determining a mapping corresponding to a linear function associated with the LPIPS curve; and
determining a normalized value for the slider value corresponding to each third image, based on the mapping.

20. An electronic device, comprising:
a memory configured to store instructions; and
a processor, coupled to the memory, configured to execute the instructions to perform a process comprising:
receiving a prompt indicative of a description of a first image to be generated;
generating, by a text-to-image model, the first image based on the prompt;
determining, based on a first language model, a set of attributes associated with the description of the first image, the set of attributes corresponding to semantics associated with the first image;
generating, based on a second language model, a set of questions associated with the prompt;
generating slider boundary values and an initial slider value based on the set of questions associated with the prompt, and the first image;
generating a set of sliders associated with the set of attributes, based on the slider boundary values and the initial slide value, each slider of the set of sliders being associated with a corresponding attribute of the set of attributes;
receiving a user input associated with the set of sliders;
generating a second image based on the user input associated with the set of sliders, and the first image; and
rendering the second image.
